**Europäisches Patentamt**

**European Patent Office**

**Office européen des brevets**

(19)

(11) Numéro de publication : **0 502 778 A1**

## (12) DEMANDE DE BREVET EUROPEEN

(21) Numéro de dépôt : **92400540.8**

(51) Int. Cl.⁵ : **C09K 11/74, C09K 11/84**

(22) Date de dépôt : **03.03.92**

(30) Priorité : **05.03.91 FR 9102606**

(43) Date de publication de la demande :
**09.09.92 Bulletin 92/37**

(84) Etats contractants désignés :
**DE GB IT**

(71) Demandeur : **THOMSON-CSF**
**51, Esplanade du Général de Gaulle**
**F-92800 Puteaux (FR)**

(72) Inventeur : **Ruelle, Nathalie**
**Thomson-CSF**
**SCPI, Cedex 67, F-92045 Paris la Défence (FR)**
Inventeur : **Pham, Thi Mai**
**Thomson-CSF**
**SCPI, Cedex 67, F-92045 Paris la Défence (FR)**
Inventeur : **Le Fur, Adèle**
**Thomson-CSF**
**SCPI, Cedex 67, F-92045 Paris la Défence (FR)**

(74) Mandataire : **Guérin, Michel et al**
**THOMSON-CSF SCPI**
**F-92045 PARIS LA DEFENSE CEDEX 67 (FR)**

(54) **Procédé de préparation de luminophores à base de sulfure d'alcalino-terreux et d'agents dopants.**

(57)     L'invention concerne un procédé de préparation de luminophore à base d'une matrice composée principalement de sulfure d'alcalino-terreux et d'activateur adapté à la couleur d'émission. Ce procédé utilise une synthèse en phase liquide et comprend l'ajout d'un agent sensibilisateur adapté à l'activateur permettant d'augmenter sensiblement le rendement lumineux.

Le procédé comprend également l'ajout d'un agent créateur de "pièges" capable de retarder la luminescence et ainsi augmenter la persistance lumineuse.

EP 0 502 778 A1

L'invention concerne l'obtention de luminophores à haut rendement lumineux.

Un luminophore est un matériau qui émet de la lumière lorsqu'il est irradié soit par des photons, soit par des électrons.

Les sulfures d'alcalino-terreux dopés avec des terres rares ou des métaux sont connus comme des luminophores très prometteurs, pour des applications de visualisation mettant en jeu la photoluminescence, l'électroluminescence ou la cathodo-luminescence. La matrice de base est un sulfure alcalino-terreux de type calcium, strontium ou baryum. Cette matrice est dopée avec un activateur choisi en fonction de la couleur de luminescence qu'on veut obtenir. Le tableau 1 illustre la correspondance entre certains activateurs et la couleur qu'ils permettent d'émettre.

| couleur | rouge | vert | bleu | ultraviolet |
|---------|-------|------|------|-------------|
| activateur | europium $Eu^{2+}$ | cerium $Ce^{3+}$ | plomb $Pb^{2+}$ | plomb $Pb^{2+}$ (très faible concentration) |

**TABLEAU 1**

Les principaux luminophores utilisés actuellement pour une application télévision sont à base d'oxysulfure d'yttrium (pour la couleur rouge) ou de sulfure de zinc (autres couleurs) qui présentent une bonne efficacité lumineuse à condition d'être dopés avec quelques pourcents de terres rares (4 % dans le cas de l'europium). Le taux de terre rare est cependant limité par des phénomènes d'autoextinctton propres à l'activateur. En effet, au-delà d'une certaine concentration, lorsque les ions sont suffisamment rapprochés il y a transfert d'énergie entre les états excités et l'énergie des activateurs est ainsi dissipée avant qu'il n'y ait eu luminescence.

L'intérêt des matrices à base de sulfure d'alcalino terreux réside dans le fait que bien que présentant des phénomènes d'autoextinction pour des concentrations très faibles (moins de 1 %) les performances obtenues avec de très faibles concentrations semblent prometteuses. Plus particulièrement dans le cas de luminophore rouge dopé avec de l'europium (matériau extrêmement cher) on obtient un luminophore beaucoup moins onéreux. La persistance lumineuse des luminophores rouges ou verts reste néanmoins trop courte (soit 1000 fois inférieure à celle des composés standards) et quelle que soit la couleur recherchée le rendement lumineux demeure insuffisant (2 à 3 fois inférieur à celui des composés standards) pour envisager à ce jour d'utiliser ces luminophores pour une application télévision. Il devient donc nécessaire d'élaborer des procédés originaux d'obtention de tels luminophores très intéressants économiquement, pour en accroître les performances.

Dans ce contexte, la présente invention propose un nouveau procédé d'obtention de luminophores à base de sulfure d'alcalino-terreux codopés avec un agent sensibilisateur capable d'augmenter le rendement lumineux et avec un agent capable d'accroître la persistance lumineuse. Il s'agit d'une méthode de préparation utilisant une synthèse en phase liquide encore appelée sulfurisation par méthode de flux. Ce type de synthèse est préféré à une sulfurisation gazeuse de sels d'alcalino-terreux beaucoup moins industrielle car elle amène un rendement lumineux plus élevé lié à la granulométrie qu'elle génère. Ces luminophores obtenus présentent une taille bien adaptée à la profondeur de pénétration des électrons excitateurs.Plus précisément la méthode de flux consiste à chauffer un sel d'alcalino-terreux en présence de composés qui se combinent à haute température pour donner un polysulfure alcalino-terreux liquide, ce polysulfure servant d'agent sulfurant pour le sel.

Plus précisément, l'invention propose un procédé de préparation par voie de synthèse en phase liquide, d'un luminophore à base d'une matrice composée principalement de sulfure d'alcalinoterreux et d'activateur adapté à la couleur d'émission : $Eu^{2+}$ pour le rouge, $Ce^{3+}$ pour le vert et $Pb^{2+}$ pour le bleu ou l'ultra-violet caractérisé en ce qu'il comprend l'ajout d'un agent sensibilisateur cationique dont le spectre d'émission présente un bon recouvrement avec le spectre d'absorption de l'activateur, ces agents étant respectivement : $Mn^{2+}$, $Tb^{3+}$ ou $Cl^-$ pour les activateurs $Eu^{2+}$, $Ce^{3+}$ et $Pb^{2+}$. La matrice utilisée peut être également une matrice de sulfure d'alcalino-terreux mixte de type sulfure de calcium et strontium (**CaSrS**).

Le procédé selon l'invention comprend aussi l'ajout d'un agent anionique monovalent dont la taille lui permet de s'introduire dans la matrice favorisant la dispersion des ions activateurs et sensibilisateurs dans la

2

matrice.

La nature du sensibilisateur est adaptée à l'activateur de la matrice, en effet son spectre d'émission doit présenter un bon recouvrement avec le spectre d'excitation (ou d'absorption) de l'activateur et le transfert d'énergie ainsi réalisé permet d'augmenter sensiblement la luminescence de l'activateur. Dans le cas d'une émission de couleur rouge si l'activateur choisi donne de bonnes performances mais avec une bande d'émission très proche de l'infrarouge, le sensibilisateur est de préférence choisi ayant une bande d'émission dans des longueurs d'onde légèrement plus courtes que celles de l'activateur. Un tel sensibilisateur cumule donc les deux fonctions : émettre dans la bande d'absorption de l'activateur et émettre à des longueurs d'ondes légèrement inférieures à celles de l'activateur. Le rendement lumineux effectif se voit ainsi augmenter puisque l'oeil est en mesure de mieux percevoir toute l'énergie émissive par le luminophore. Dans le cas d'une émission de couleur rouge obtenue à partir d'une matrice de sulfure d'alcalino-terreux dopée avec de l'europium $Eu^{2+}$, l'ion manganèse $Mn^{2+}$ joue particulièrement bien le rôle de sensibilisateur. En effet l'émission de l'europium se situe dans le rouge profond (1 émission = 650 nm). L'ion $Mn^{2+}$ présente une bande d'absorption centrée sur 1 = 390 nm, alors que son émission qui se situe à 1 = 580 nm présente un bon recouvrement avec la bande d'absorption de l'ion $Eu^{2+}$ (très large bande comprise entre 400 et 630 nm).

La nature de ce sensibilisateur dépend donc directement de la nature de l'activateur.

Dans le cas d'une émission de couleur rouge l'activateur est de préférence de l'europium $Eu^{2+}$, le sensibilisateur adapté est de préférence l'ion $Mn^{2+}$. Il peut également s'agir des ions cérium $Ce^{3+}$ ou des ions terbium $Tb^{3+}$ ou des ions samarium $Sm^{3+}$. Cependant dans le cas où ces ions sensibilisateurs ne présentent pas la même valence que les ions activateurs il est nécessaire d'introduire un compensateur de charge empêchant la formation d'ions $Eu^{3+}$ qui auraient tendance à se former. En effet le transfert d'énergie du sensibilisateur vers l'ion $Eu^{3+}$ s'effectue alors très difficilement à cause de certaines transitions non radiatives interdites au niveau de l'ion $Eu^{3+}$.

Dans le cas du couple (activateur, sensibilisateur) = ($Eu^{2+}$, $Mn^{2+}$), les concentrations dans la matrice peuvent avantageusement se situer dans les intervalles suivants : $0,01 \% \leqq [Eu^{2+}] \leqq 0,1 \%$ et $0,2 \leqq [M_n^{2+}] \leqq 1\%$.

Pour une émission de couleur verte, l'activateur est de préférence l'ion cérium $Ce^{3+}$, le sensibilisateur préféré sera très avantageusement l'ion terbium $Tb^{3+}$.

Dans une matrice CaS les concentrations en Cerium et terbium peuvent être choisies dans les intervalles suivants : $0,06 \% \leqq [Ce^{3+}] \leqq 0,16 \%$ et $0,05 \% \leqq [Tb^{3+}] \leqq 0,25 \%$.

Pour une émission bleue ou ultraviolette, l'activateur est de préférence l'ion $Pb^{2+}$, en très faible concentration pour l'ultraviolet (concentration inférieure à 0,05 %) en concentration supérieure à 0,05 % pour le bleu car il se forme des agrégats d'ions $Pb^{2+}$ qui modifient les longueurs d'onde d'émission. Le sensibilisateur peut être l'ion bismuth $Bt^{3+}$ puisqu'il présente le recouvrement nécessaire de sa bande spectrale d'émission avec celle d'absorption de l'ion $Pb^{2+}$.

Cependant l'introduction d'un compensateur de charges de type ion Cl- modifie le champ cristallin de l'ion activateur perturbant ainsi la formation d'agrégats et entraîne un déplacement des longueurs d'onde globale d'un luminophore dopé au $Pb^{2+}$. Dans ce cas même une concentration en plomb supérieure à 0,05 % génère une émission dans l'ultraviolet, avec un rendement lumineux élevé.

Parallèlement à l'ajout d'un sensibilisateur, la présente invention concerne l'introduction d'un autre agent capable d'augmenter la durée de persistance lumineuse, donc la durée des phénomènes de luminescence. Il s'agit d'un codopant monovalent capable de créer des pièges d'électrons au niveau de la bande de conduction de la matrice, entraînant un retard au niveau de l'émission radiative (ou luminescence). Ce codopant anionique vient perturber la matrice de sulfure d'alcalino-terreux en venant remplacer localement des ions $S^{2-}$. Ce codopant anionique doit présenter une taille suffisamment faible pour pénétrer dans la matrice d'alcalino-terreux. Il est de préférence de type ion **Cl-** ou **F-** ou **PO₄-**.

La présente invention sera mieux comprise et d'autres avantages apparaitront à la lecture de la description et des exemples qui vont suivre.

Les luminophores selon l'invention sont obtenus de préférence par sulfurisation en phase liquide. On chauffe le sel d'alcalino-terreux, l'activateur, le sensibilisateur et l'agent monovalent capable d'introduire des pièges avec un mélange à base de carbonate d'alcalin (**Na₂ CO₃** ou **K₂ CO₃** ou **Li₂ CO₃**) et de soufre générant à très haute température le polysulfure alcalin (de type **Na₂ S** ou **K₂ Sₓ** ou bien encore **Li₂ Sₓ**). Ce polysulfure sert d'agent sulfurant au sel d'alcalino-terreux.

De préférence la méthode de synthèse par flux utilisée dans l'invention est réalisée en présence de potassium (donc **K₂ CO₃**). Les sels d'alcalino-terreux employés sont de préférence des sulfates ou des carbonates. Les ions europium $Eu^{2+}$ sont de préférence introduits sous forme d'oxyde alors que les ions manganèse $Mn^{2+}$ ou les ions cérium $Ce^{3+}$ ou les ions plomb $Pb^{2+}$ sont introduits de préférence sous forme de sulfate. La méthode de flux utilisant du potassium est très avantageuse dans le cas de l'europium, car elle aboutit à la formation d'ions divalents $Eu^{2+}$ et non trivalents, permettant le transfert d'énergie entre sensibilisateur et activateur. Le potassium pourrait éventuellement être remplacé par du cérium ou du rubidium.

**EXEMPLE 1** : Luminophore émettant dans le rouge l'activateur étant l'europium, le sensibilisateur étant le manganèse :

200 g de carbonate de calcium $CaCO_3$ et 3,25 g d'oxyde d'europium $Eu_2O_3$ sont mis en suspension dans 200 cl d'alcool éthylique.
$C_2H_5OH$ au moyen d'un mélangeur pendant 4h. Après agitation, l'alcool est évaporé par étuvage à 60°C. On obtient un mélange pulvérulent qu'on appellera Poudre A.

D'autre part, 16,9 g de sulfate de manganèse $MnSO_4$ sont dissout dans 200 cl d'eau formant la solution aqueuse Mn 1. 50 cl de cette solution Mn1 sont dilués dans 450 cl d'eau ce qui constitue la solution de sulfate de manganèse Mn2.

Cent cinquante centilitres de cette solution sont redilués avec 200 cc d'eau. A cette dernière solution, on ajoute 25g de la poudre appelée poudre A précédemment et 225 g de $CaCO_3$. L'eau de cette suspension, maintenue est évaporée lentement et on obtient une poudre appelée poudre B contenant la proportion d'europium et de manganèse voulue. 50 g de cette poudre B sont mélangés avec 52 g de carbonate de potassium et 48 g de soufre au moyen d'un mélangeur. 30 g de ce mélange de poudre obtenue sont introduits dans un creuset en alumine et recouvert de 3 g de soufre. Le creuset est fermé avec un couvercle en alumine et placé dans un four. Le traitement thermique est effectué à 1000°C sous un courant d'azote pendant 2 heures.

Le bloc de produit obtenu après cuisson est trempé dans une solution basique à pH = 11 puis agité avec un agitateur magnétique. Le bloc de produit se désagrège au bout de quelques minutes. La poudre otenue est lavée trois fois avec de la solution basique puis filtrée, rincée avec de l'alcool et séchée à l'étuve. On obtient une poudre rose foncé dont la taille de grain moyen est de 10 µm. Le rendement lumineux est de l'ordre de 200 % par rapport au luminophore CaS dopé à l'europium seul. Sa persistance lumineuse est de l'ordre de la microseconde.

**EXEMPLE 2** : Luminophore émettant dans le vert, l'activateur étant le cérium, le sensibilisateur étant le terbium :

10,68g de $Ce(SO_4)_3 8H_2O$ sont dissout dans 300cc d'eau, à cette solution sont ajoutés 300,27g de $CaCO_3$. La suspension est agitée puis séchée pour donner une poudre appelée poudre $A_2$. 132g de la poudre $A_2$ sont mélangés avec 268g de $CaCO_3$ dans l'alcool donnant après séchage une poudre $B_2$.

D'autre part, 5,5g de $Tb_4O_7$ sont mélangés avec 300g de $CaCO_3$ dans l'alcool. A 200g de cette poudre $C_2$ sont mélangés 200g de $CaCO_3$ donnant ainsi une poudre $D_2$ après séchage.

50g de la poudre $B_2$ et 50g de la poudre $D_2$ sont mélangés dans l'alcool puis séchés. A 50g de cette poudre sont ajoutés 40g de $Na_2CO_3$ et 48g de soufre ; le mélange est agité au turbulat pendant 4 heures.

50g du mélange recouvert d'une couche de soufre sont placés dans un creuset alumine fermé par un couvercle et chauffés à 1000°C pendant 2 heures. La poudre verte obtenue après lavage indique la présence de $Ce^{3+}$ dans le luminophore. Les mesures en photoluminescence et cathodoluminescence (25kV, 20uA) présentent respectivement un rendement lumineux respectif de 146% et 85% par rapport au luminophore standard ZnS : Cu, Al. L'augmentation du rendement de CaS : Ce, Tb est de l'ordre de 20% comparé au produit non codopé CaS : Ce.

**EXEMPLE 3** : Luminophore émettant dans l'ultraviolet, l'activateur étant le plomb, le sensibilisateur étant le chlore.

40g de $(CH_3COO)pb_3H_2O$ sont dissouts dans 300cc d'eau. A cette solution sont ajoutés 400g de $CaCO_3$. La suspension est agitée puis séchée pour donner une poudre appelée poudre $A_3$. 150g de la poudre $A_3$ sont mélangés avec 225g de $CaCO_3$ dans l'alcool donnant après séchage une poudre $B_3$. A 50g de cette poudre sont ajoutés 50g de $K_2CO_3$ et 48g de soufre ; le mélange est agité au turbulat pendant 4 heures.

50g du mélange recouvert d'une couche de soufre sont placés dans un creuset aluminé fermé par un couvercle et chauffés à 800°C pendant 2 heures. La poudre obtenue après lavage présente une émission bleue centrée vers 420nm sous excitation photonique et cathodique (poudre $C_3$).

150g de la poudre $C_3$ sont mélangés 225g de $CaCO_3$ donnant la poudre $D_3$. 150g de cette poudre $D_3$ sont mélangés avec 150g de $CaCO_3$ pour donner la poudre $E_3$.

A 50g de cette poudre $E_3$ sont ajoutés 50g de $K_2CO_3$ et 48g de soufre ; le mélange est agité au turbulat pendant 4 heures.

50g du mélange recouvert d'une couche de soufre sont placés dans un creuset alumine fermé par un couvercle et chauffés à 850°C pendant 30mn. La poudre obtenue présente des émissions UV à 368nm et bleue vers 420nm.

50g de la poudre $E_3$ sont mélangés avec 50g de $K_2CO_3$ et 15g de KCl et 48g de soufre. Après chauffage à 850°C pendant 30mn le luminophore obtenu présente seulement l'émission UV intense à 368nm.

**Revendications**

1.  Procédé de préparation par voie de synthèse en phase liquide, d'un luminophore à base d'une matrice composée principalement de sulfure d'alcalinoterreux et d'activateur adapté à la couleur d'émission : $Eu^{2+}$ pour le rouge, $Ce^{3+}$ pour le vert et $Pb^{2+}$ pour le bleu ou l'ultraviolet caractérisé en ce qu'il comprend l'ajout d'un agent sensibilisateur cattonique dont le spectre d'émission présente un bon recouvrement avec le spectre d'absorption de l'activateur, ces agents étant respectivement : $Mn^{2+}$, $Tb^{3+}$ ou $Cl^-$ pour les activateurs $Eu^{2+}$, $Ce^{3+}$ et $Pb^{2+}$.

2.  Procédé selon la revendication 1, caractérisé en ce qu'il comprend également l'ajout d'un agent anionique monovalent dont la taille lui permet de s'introduire dans la matrice favorisant la dispersion des ions activateurs et sensibilisateurs dans la matrice.

3.  Procédé selon la revendication 2, caractérisé en ce que l'agent anionique monovalent est un ion $Cl^-$ ou un ion $F^-$ ou un ion $PO_4^-$.

4.  Procédé selon l'une des revendications 1 à 3, caractérisé en ce que l'alcalino-terreux est du calcium.

5.  Procédé selon l'une quelconque des revendications 1 à 3, caractérisé en ce qu'il utilise un sulfure de calcium et strontium CaSrS.

6.  Procédé selon la revendication 1 d'un luminophore dont la couleur d'émission est le rouge, caractérisé en ce que l'alcalino-terreux est du calcium et que l'on utilise pour la sulfurisation du calcium un flux de sulfurisation à base d'un polysulfure à cation monovalent dont le rayon ionique est supérieur ou égal à celui du potassium, et en particulier un polysulfure dont le cation est le potassium.

7.  Procédé selon la revendication 1, caractérisé en ce que l'activateur est l'ion $Pb^{2+}$ dont la concentration dans la matrice est supérieure à 0,05% pour obtenir une émission dans le bleu.

8.  Procédé selon la revendication 1, caractérisé en ce que l'activateur est l'ion $Pb^{2+}$ dont la concentration dans la matrice est inférieure à 0,05% pour obtenir une émission dans l'ultraviolet.

9.  Procédé selon l'une des revendications 1 à 6, caractérisé en ce que l'activateur est l'ion $Eu^{2+}$, le sensibilisateur est l'ion $Mn^{2+}$ et les concentrations dans la matrice sont respectivement comprises dans les intervalles suivants : $0,01\% \leqq [Eu^{2+}] \leqq 0,1\%$ et $0,2 \leqq [Mn^{2+}] \leqq 1\%$.

10. Procédé selon l'une des revendications 1 ou 2, caractérisé en ce qu'il utilise un sulfure de calcium, l'activateur étant le cérium, le sensibilisateur étant le terbium et les concentrations dans la matrice étant respectivement comprises dans les intervalles suivants : $0,06\% \leqq [Ce^{3+}] \leqq 0,16\%$ et $0,05\% \leqq [Tb^{3+}] \leqq 0,25\%$.

11. Procédé selon la revendication 1, caractérisé en ce qu'il utilise un sulfure de calcium, l'activateur étant le plomb, le sensibilisateur étant le chlore, et le luminophore ainsi obtenu étant chauffé entre 850°C et 925°C durant 30 minutes pour émettre dans l'ultraviolet vers 368nm.

Office européen
des brevets

**RAPPORT DE RECHERCHE EUROPEENNE**

Numero de la demande

EP    92 40 0540

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-1 581 830 (SECRETARY OF STATE FOR DEFENCE) <br> * le document en entier * <br> --- | 1-5,7,11 | C09K11/74 <br> C09K11/84 |
| X | US-A-4 065 688 (W.A.THORNTON) <br> * le document en entier * <br> --- | 1-4,7,11 | |
| X | US-A-4 029 983 (W.A.THORNTON) <br> * le document en entier * <br> --- | 1-5,7,11 | |
| X | US-A-3 898 174 (W.LEHMANN) <br> * le document en entier * <br> --- | 1-4,7,11 | |
| A | DE-A-2 843 259 (WESTINGHOUSE) <br> * le document en entier * <br> ----- | 1 | |

**DOMAINES TECHNIQUES RECHERCHES (Int. Cl.5)**

C09K

Le présent rapport a été établi pour toutes les revendications

| Lieu de la recherche <br> LA HAYE | Date d'achèvement de la recherche <br> 21 MAI 1992 | Examinateur <br> DROUOT M.C. |
|---|---|---|

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)